# EUROPEAN PATENT SPECIFICATION

(11) **EP 3 601 031 B1**
(45) Date of publication and mention of the grant of the patent: **11.05.2022**
(21) Application number: 18715088.3
(22) Date of filing: 23.03.2018
(51) Int. Cl.: B62M 17/00, B62K 5/02

(54) **TRICYCLE**
DREIRAD
TRICYCLE

(30) Priority: 23.03.2017 GB 201704602
(43) Date of publication of application: 05.02.2020
(73) Proprietor: Manning, John Richard, Salfords, Surrey RH1 5EY (GB)
(72) Inventor: Manning, John Richard, Salfords, Surrey RH1 5EY (GB)
(74) Representative: Lucas, Brian Ronald
(86) International application number: PCT/GB2018/050760
(87) International publication number: WO 2018/172784

(56) References cited:
- FR-A- 1 284 541
- GB-A- 2 484 091
- US-A- 6 104 154

## Description

This invention relates to tricycles, more particularly but not exclusively, to load carrying tricycles.

US6104154 discloses the preamble of claim 1.

Rigid frame tricycles are well known and used by both children and adults. Typically, a rigid frame tricycle will have either one wheel at the front of the tricycle and two wheels at the rear of the tricycle, or the reverse with two wheels at the front and one wheel at the rear of the tricycle. Pedals are often used with chain drives to enable the rider to sit in a seat on the tricycle and pedal to drive either the front wheel(s) or rear wheel(s), allowing the tricycle to move forwards.

When riding a rigid framed tricycle on a cambered road, which is at an angle perpendicular to the direction of travel, the rider will often have to shift his bodyweight to counterbalance the tricycle and inhibit it overturning. In some cases, the rider has to even move out of his seat or lean awkwardly, whist still pedalling to achieve the desired counter balance. This is not particularly safe and it can be difficult to continuously move the pedals whilst in such positions, potentially putting the rider under serious strain.

Furthermore, when a rigid frame tricycle is ridden around a corner, the "centrifugal force" acting on the rider and tricycle in the radial direction from the centre of the corner, can cause the tricycle to fall over. The rider typically has to compensate for the inertia by leaning into the corner, often moving out of his seat. This is not particularly safe because he is likely to be precariously standing out of his seat and could easily over lean, bringing the tricycle fully over and himself to the ground. Additionally, the rider may not lean into the corner enough and the "centrifugal force" could be sufficient to push him and the tricycle fully over.

Whilst the movement of the rider out of his seat and the shifting of his bodyweight can provide sufficient counterbalance of the tricycle, it is not safe to do so and there is always an inherent risk of the rider falling off and the tricycle falling on top of him.

Similar problems are present in motorised tricycles.

This problem can be reduced by allowing the frame to roll relative to the rear wheels. However, this presents a problem in transmitting power from the pedals to the rear wheels.

The present invention at least in its preferred embodiment attempts to reduce this problem.

The present invention provides a tricycle comprising a frame, two rear wheels and a front wheel, means enabling the frame to roll relative to the rear wheels and a drivetrain for rotating at least one rear wheel to, in use, propel the tricycle along a road, wherein the drivetrain comprises a drive shaft extending in a direction substantially perpendicular to the axial direction of the two rear wheels, a drive wheel rotatable by the drive shaft, characterised in that the drivetrain further comprises a helical gear assembly connected to and arranged to rotate the drive shaft, and that the drive wheel is a sprocket wheel, a driven wheel which, on rotation rotates the at least one rear wheel, wherein the driven wheel is a sprocket wheel, and a drive member for transmitting rotation of the drive wheel to the driven wheel, wherein the drive member is a chain.

Preferably the sprocket wheel is a wheel which is provided with sprocket teeth around its circumference.

Alternatively but not claimed, the drive wheel could be a pulley wheel. It may be that the pulley wheel is manufactured from or coated with a material which has a sufficiently high coefficient of friction to inhibit slippage of the drive member. This could be for example an elastomeric material.

Alternatively but not claimed, the driven wheel could be a pulley wheel. It may be that the pulley wheel is manufactured from or coated with a material which has a sufficiently high coefficient of friction to inhibit slippage of the drive member. This could be for example an elastomeric material.

Preferably the driven wheel is a part of a differential. More preferably the driven wheel is attached to the crown wheel of a differential. It may be that the driven wheel is a wheel which directly drives the crown wheel of a differential. According to the invention, the driven wheel is a sprocket wheel or alternatively but not claimed, a pulley wheel which is mounted on the crown wheel of a differential

It may be that the chain is formed from links. It could be that the chain is manufactured from carbon steel or plain-carbon steel or a different steel alloy or carbon fibre. It its optional that the chain is coated, for example it could be nickel plated to inhibit rusting.

Alternatively but not claimed, the drive member is a belt. Optionally, but not claimed, belt is non-stretchable or stretchable. It could be - alternatively but not claimed - that the belt is manufactured from carbon fibre or any other suitable material.

Advantageously a plurality of sprocket wheels are provided. Preferably a plurality of sprocket wheels each of different diameter sizes are provided. More preferably the plurality of sprocket wheels are arranged adjacent and coaxial to each other.

Preferably a rear derailleur gear assembly is provided with the plurality of sprocket wheels. Advantageously a front derailleur gear assembly is provided with the plurality of sprocket wheels. These options are both advantageous as they allow the user to move the drive member from engagement with one sprocket wheel to engagement with a different sprocket wheel. In this way the user has a number of gear ratios to select and allows for easier pedalling when carrying a heavy load and/or going up hills.

It could be that the helical gear assembly comprises gear wheels of different sizes. Helical gears are advantageous as they are quieter than bevel gears and can take a greater load for the same sized bevels.

Advantageously pedals and cranks are provided which in use, drive the helical gear assembly.

Preferably a first bevel gear wheel is connected to the drive shaft, a second bevel gear wheel which meshes with the first bevel gear wheel and is drivingly connected to at least one of the rear wheels. It may be that the first bevel gear wheel is larger than the second bevel gear wheel.

Advantageously the second bevel gear wheel is mounted on and rotatably fixed to an intermediate axle.

Preferably the intermediate axle extends across walls of a box. More preferably the ends of the intermediate axle are rotatably fixed to the walls of the box.

Advantageously the drive wheel is mounted on and rotatably fixed to said intermediate axle.

Preferably the driven wheel is mounted on and rotatably fixed to a rear axle.

Advantageously the at least one rear wheel is mounted on the rear axle.

Preferably the helical gear assembly is drivingly connected to the at least one rear wheel via the drivetrain.

Preferably at least one of the rear wheels is provided with a hub gear.

Advantageously the tricycle is provided with a platform.

Preferably the platform is a load carrying platform, for example, suitable for carrying shopping or tools.

Preferably the drive shaft is provided with a casing.

Advantageously the casing partially resides in a cylinder portion of the frame and is rotatable relative thereto. It could be that the casing is rotatably supported by bearings in the bore of the cylinder. It may be that no bearings are present and lubricant is used to assist the rotation of the casing relative to the cylinder.

Preferably the tricycle further comprises a collar which is fitted to the frame with a strut and a strut, the collar residing around a portion of the casing and rotatable relative thereto. It may be that bearings or lubricant are used or a combination thereof to assist the rotation of the casing relative to the collar.

Advantageously the casing is secured to the platform at a portion of the casing which is between the cylinder and the collar. Preferably the casing is welded to the platform. It could be that the casing is fixed to the platform by any suitable means, including screws, bolts or any combination thereof.

Preferably the end of the casing is secured to the platform at a portion of the casing which protrudes from the collar.

Advantageously a mount is fixed to the platform and the end of the casing is secured to the mount at a portion of the casing which protrudes from the collar.

Preferably the collar movably resides within a recess of the mount.

Advantageously the platform is provided with a panel.

Preferably the panel is provided with struts, where said struts are also fixed to the platform.

Preferably the panel comprises a slot in which a portion of the frame passes through. It could be that the slot is a curved slot on a curved portion of the panel.

Advantageously a portion of the frame is provided with rollers which roll in the slot.

Preferably the casing is secured to the platform. Preferably the casing is welded to the platform. It could be that the casing is fixed to the platform by any suitable means, including screws, bolts or any combination thereof.

Advantageously the casing is secured to the platform, the arrangement being such that in use the frame can rotate relative to the casing and the platform.

Preferably the frame is rotatable about an axis which is at an angle to the horizontal. Most preferable the axis is at an angle below the horizontal.

Advantageously the frame is rotatable about an axis which is coaxial with the axis of the drive shaft.

Preferably the axis intercepts a point on the front wheel that is in contact with the ground or on a point close thereto.

Advantageously stops are provided to limit the rotation of the frame relative to the casing and the platform.

Preferably the ends of the slot limit the rotation of the frame relative to the casing and the platform.

Advantageously the frame can roll through an angle of 0° to 45 ° from the vertical, on either side of the vertical.

Preferably the frame can roll through an angle of 0° to 25 ° from the vertical, on either side of the vertical.

Advantageously the axis is at an angle of 5° to 30° from the horizontal.

Preferably the axis is at an angle of 10° to 20° from the horizontal.

Advantageously the axis is at an angle of approximately 15° from the horizontal.

To facilitate the understanding, we have used the terms "front" and "rear" throughout. However, it should be understood that, for the purpose of the introduction and claims the terms "front" and "rear" could be reversed, i.e. the tricycle could comprise two front wheels and a single rear wheel.

Normally a tricycle is provided with three wheels. However, owners and manufactures of tricycles occasionally supplement one or more of the wheels with a second wheel either to create a distinctive appearance or to improve traction. The term 'tricycle' as used herein is intended to embrace such constructions.

Similarly, if the platform is intended to carry a long or heavy load it may be desirable to provide one or more additional rear wheels, for example a pair of additional rear wheels on a separate and distinct axle located rearwardly of the rear wheels (the driven wheels) to inhibit the front wheel lifting off the ground. Such additional rear wheels may be arranged to be in permanent contact with the ground or situated just above the ground so that they only engage the ground when the platform is loaded and, for example the rider dismounts.

The means for driving the rear wheels could comprise, for example an electric motor or a petrol or diesel engine. However, it is anticipated that pedal power will be more commonly used.

For a better understanding of the present invention and to show how the same may be carried into effect, reference will now be made, by way of example, to the accompanying drawings, in which:
Figure 1 is a partially exploded perspective view of a first not claimed, concept tricycle;
Figure 2 is a side view in partial cross section of the tricycle as shown in Figure 1;
Figure 3 is rear view in partial cross section of the tricycle as shown in Figure 1;
Figure 4 is a perspective view of a second but not claimed, concept tricycle;
Figure 5 is a side view in partial cross section of the tricycle as shown in Figure 4; and
Figure 6 is rear view in partial cross section of the tricycle as shown in Figure 4.
Figure 7 is a plan view in partial cross section of part of a tricycle in accordance with the present invention;
Figure 8 is a side view of the part of the tricycle as shown in Figure 7.

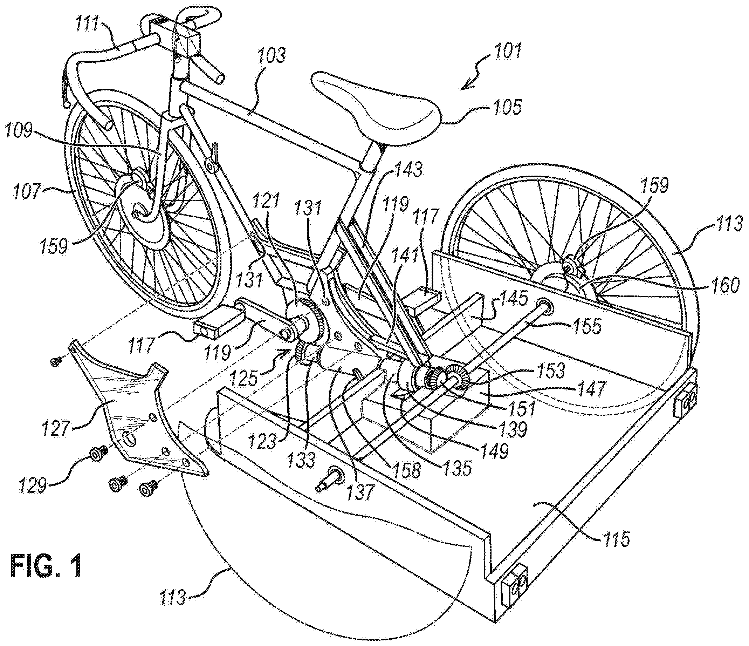

Referring to Figure 1 of the drawings, there is shown a tricycle 101 having a frame 103 with a seat 105 thereon. A front wheel 107 is rotatably mounted on a fork 109 which is pivotally mounted on frame 103. Handlebars 111 are rigidly fixed with the fork 109 allowing the rider (not shown) to control the front wheel 107 of the tricycle 101 as appropriate.

The tricycle 101 is provided with two rear wheels 113 (partially shown) rotatably fixed to a platform 115, which is suitable for load carrying.

Pedals 117 are rotatably fixed to cranks 119, which in turn are fixed to a first cog wheel 121. The first cog wheel 121 is mounted on an axle through the bottom bracket of the frame 103 such that the first cog wheel 121 can be rotated by the pedals 117. The teeth of the first cog wheel 121 mesh with the teeth of a second cog wheel 123 arranged perpendicular to the first cog wheel 121. Both first cog wheel 121 and second cog wheel 123 have teeth set at an angle such that their meshed arrangement forms a helical gear assembly 125. The teeth of both cog wheels 121,123 are typically each arranged at an angle of 45º from a line tangent to each respective cog wheel 121,123.

The helical gear assembly 125 is protected by a housing 127 which is fixed to the frame 103 with bolts 129 in corresponding holes 131.

The second cog wheel 123 is fixed to a drive shaft 133, such that rotation of the second cog wheel 123 rotates the drive shaft 133. The drive shaft 133 resides in a casing 135, which casing 135 is rotatably supported by bearings in the bore of a cylinder 137. Cylinder 137 is rigidly fixed to a lower portion of the frame 103. The casing 135 further resides in the bore of a collar 139, which collar 139 is rigidly fixed to the frame 103 by strut 141 and strut 143.

The casing 135 is fixed to the platform 115 by welding with a front wall 145 of the platform 115. The casing 135 is further fixed to the platform by welding with a mount 147, which mount 147 is in turn welded to the platform 115. The collar 139 resides within a recess 149 in the mount 147, the arrangement being such that the collar 139 is able to rotate around the casing 135 through the recess 149.

The rear end of the drive shaft 133 is provided with a frusto conical first bevel gear wheel 151 having teeth which engage with corresponding teeth on a frusto conical second bevel gear wheel 153. The second bevel gear wheel 151 is arranged perpendicular to the first bevel gear wheel 153 on an axle 155.

Rear wheels 113 are driven by the axle 155 via ratchet drives (not shown) which enable the rear wheels 113 to independently over spin (freewheel) on their bearings so that the tricycle 101 can roll forward when the axle 155 is not rotating. This is preferable relative to simply connecting the wheels 113 directly to the axle 155.

It will be appreciated that the frame 103 can move between the vertical (as shown) and inclined positions either side of vertical whilst the rear wheels 113 remain vertical and the axle 155 horizontal.

In use, typically a rider will put their feet on the pedals 117 and sit on the seat 105 of the frame 103 (or stand on the pedals 117). The rider will pedal, in the same manner as a conventional bicycle, to drive the first cog wheel 121. This in turn will drive the second cog wheel 123 and the drive shaft 133. The drive shaft 133 is axially rotated within its casing 135 and in turn rotates the first bevel gear wheel 151, which drives the second bevel gear wheel 153 and the axle 155. The rotation of the axle drives the rear wheels 113 and the rider can move forward with the tricycle 101.

In the event that the road surface is cambered, the rider is able to balance on the frame 103, either in the seat 105 or standing on the pedals 117 and remain upright, so that he and the frame 103 remain substantially vertical as if on a conventional bicycle. This is whilst the rear wheels 113 and platform 115 move with the camber increase in the road.

The frame 103 is movable in a roll rotation relative to the axle 155, rear wheels 113 and platform 115 and vice versa. As the degree of camber increases, the rear wheels 113 and platform 115 move with the camber increase of the road, so that the base of the platform 115 remains substantially parallel to the surface of the road. The rear wheels 113 and platform 115 with casing 135 fixed thereto, roll relative to the frame 103. In particular, the casing 135 (which is fixed to the platform 115) rotates within and relative to the cylinder 137 of the frame 103.

Therefore the rider and frame 103 are able to remain upright and substantially vertical, whilst the rear wheels 113 and platform 115 have moved relative to the frame 103 and the rider, to accommodate for the cambered road.

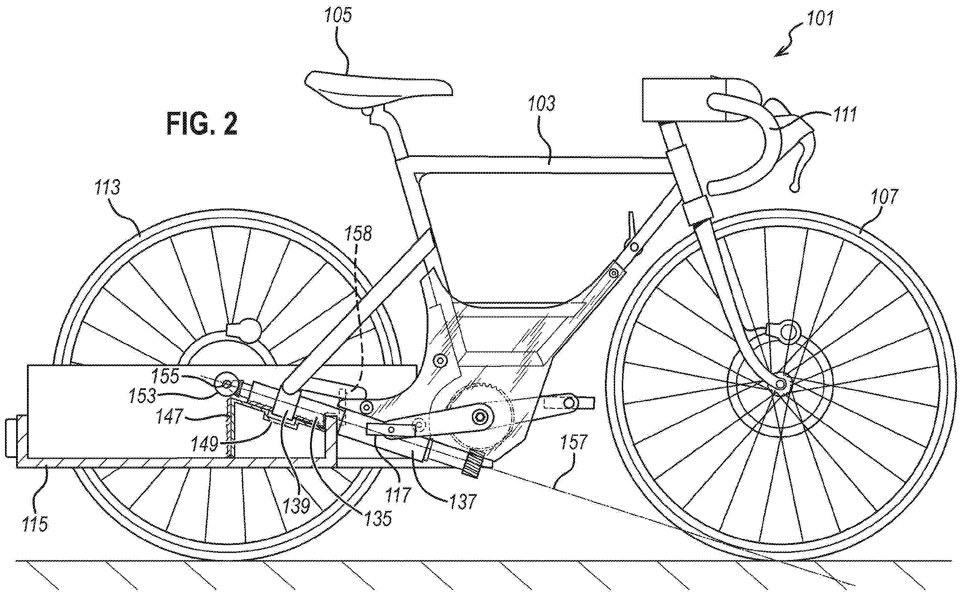

The platform 115 and rear wheels 113 are able to rotate about an axis 157 that runs through the drive shaft 133 and intersects where the front wheel 107 is in contact with the ground, as better shown in Figure 2.

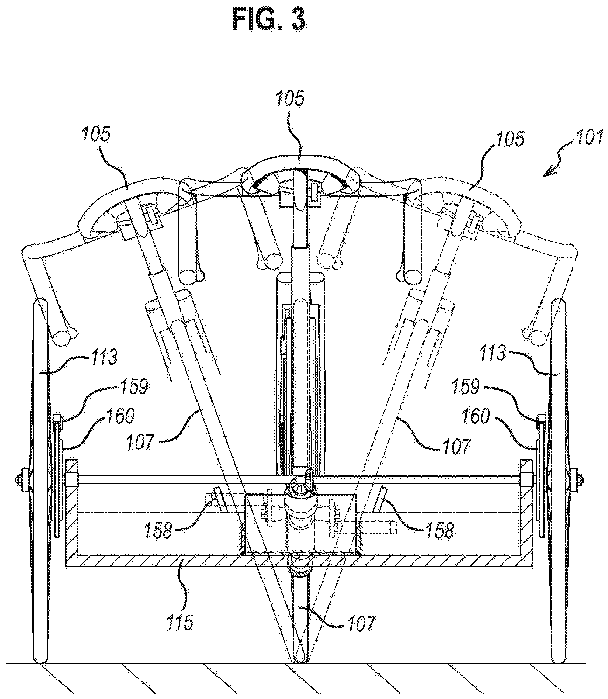

Referring to Figure 3, the use of helical gear assembly 125, the drive shaft 133 and the bevel gear assembly, enables the rider to move the frame 103 relative to the rear wheels 113 and platform 115, throughout a range of angles. Typically, roll of approximately 25º from vertical on one side and 25º from vertical on the other side is sufficient. The degree of roll on both sides of the vertical is limited by stops 158.

This configuration allows the roll movement, which is not achievable with chain and cogwheel assemblies on conventional bicycles, because such movement would require a pre-fixed length chain to stretch or a conventional chain arrangement to twist.

In the scenario that a rider is to turn a corner, he is able to lean into such a corner as he would on a conventional bicycle, in order to increase his centripetal force and counteract the "centrifugal force" on the rider that arises during cornering. The rider, by shifting their bodyweight is able to roll the frame 103 about the axis 157 by a suitable amount in an attempt to balance the forces when turning the corner. The rider is able to roll the frame 103 up to a maximum of 25º from the vertical, until the frame abuts the relevant stop 158. In this fashion, the rider is able to remain safely seated and may still pedal if desired, with a smaller risk of the tricycle 101 tipping over during a corner. The reduced need for the rider to stand up and lean over, as in the case of rigid frame tricycles, inhibits the rider falling off.

If the corner is particularly sharp and the 25º lean is not sufficient to balance the forces, the rider would have to slow down the tricycle 101 as he would have to on a conventional bicycle in order to safely make the corner without tipping over. The rider can slow down using disc brakes 159 fitted to front wheel 107 and rear wheels 113.

The rear wheels 113 are free to independently over spin on their bearings, such that it is possible for the rear wheels 113 to be rotating at different speeds relative to each other, as required when taking a corner.

Hub gears 160 are fitted such that the rider has a choice of gears with which to drive the rear wheels 113.

A further advantage of the helical gear assembly 125 is that it remains within housing 127 and so is shielded from grit and dirt that contaminate a conventional chain assembly. Additionally, the tricycle 101 does not suffer from the problem of a chain slipping off the cog gear wheels which plagues conventional chain assemblies.

This simple helical gear assembly 125 inhibits either of the rear wheels 113 from leaving the ground during a turn. Furthermore, it provides a simple solution and negates the need for complicated systems that hold adjacent wheels on separate axles, such that the wheels are able to tilt to the vertical with their respective axles, when the rider is handling a corner.

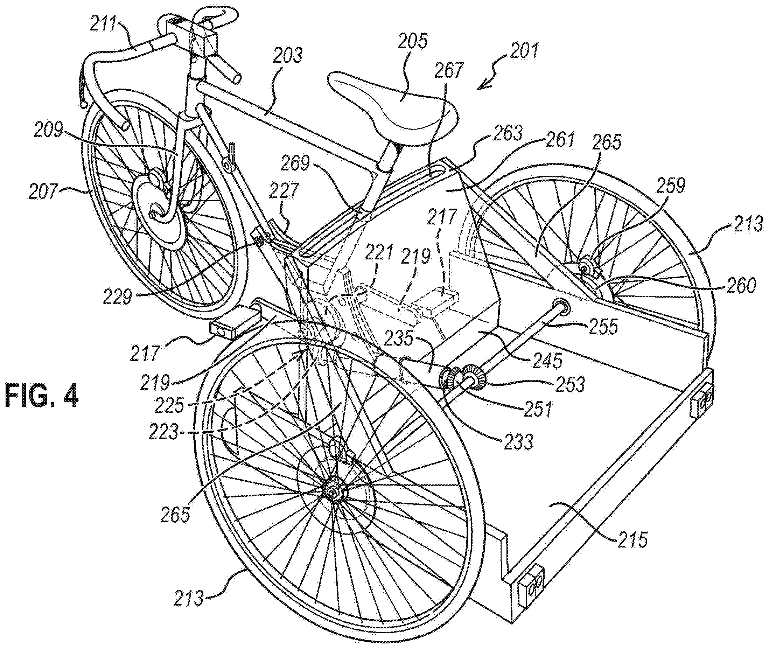

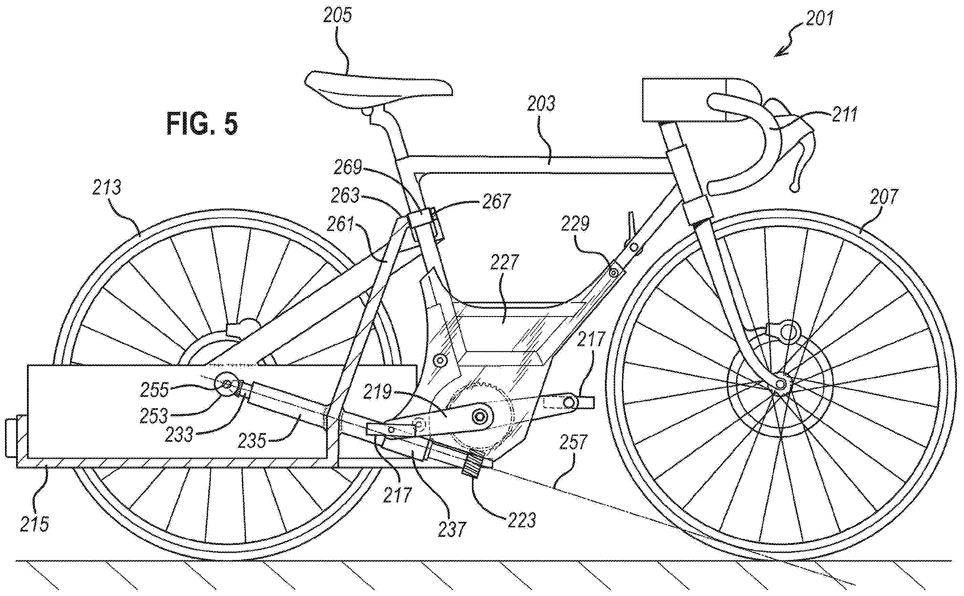

Referring to Figures 4 and 5, there is shown a tricycle 201 which is substantially similar to the tricycle 101. Parts having similar functions have been identified by similar reference numerals in the "200" series. The tricycle 201 is provided with a panel 261 which is fixed to front wall 245 on the platform 215. The panel 261 leans forward towards the front of the tricycle 201 and is provided with a lip 263 at the top of the panel 261. Struts 265 depend downwardly from either side of the top of the panel 261 to a central portion of the side walls of the platform 215.

The casing 235 and the drive shaft 233 therein, pass through the front wall 245 and panel 261 of the platform 215. The casing 235 is secured in this position through the front wall 245 and panel 261 by welding.

The lip 263 is provided with a slot 267 in which a portion of the frame 203 below the seat 205 passes through. Rollers 269 are provided on the frame 203 in order to allow the frame portion 203 to smoothly move in and along the slot 267.

In use, the rider is able to ride the tricycle 201 in the same manner as previously described with reference to tricycle 101. When the rider is riding the tricycle 201 on a cambered road, the casing 235, drive shaft 233, rear wheels 213, platform 215 and panel 261 are able to rotate about axis 257 relative to the frame 203, the front wheel 207 and the cylinder 237.

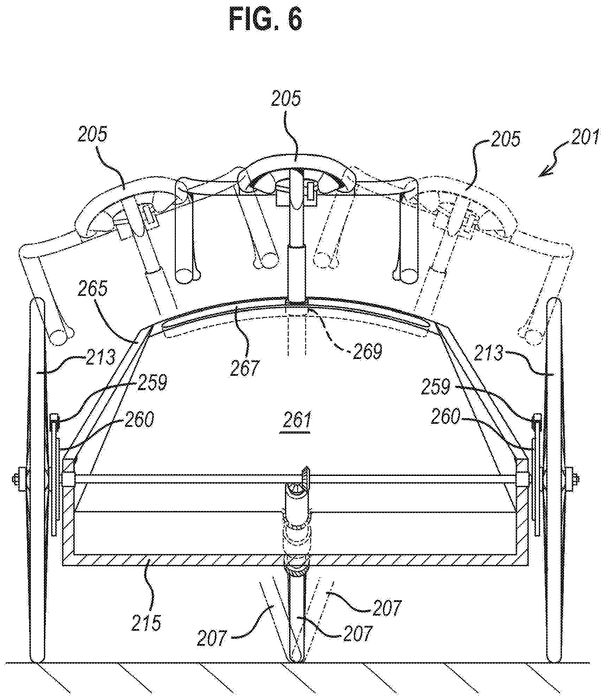

Furthermore, and as better shown in Figure 6, when the rider takes a corner, he is able to lean into the corner and roll the frame 203 to compensate for the inertia. The rider is able to roll the frame 203, the front wheel 207 and the cylinder 237 about axis 257, relative to the casing 235, drive shaft 233, rear wheels 213, platform 215 and panel 261, as previously described with reference to the first embodiment.

The portion of the frame 203 below the seat 205 is able to move through the slot 267 as the rider leans to his left or to his right. The ends of the slot 267 in the lip 263 act as stops 258 to limit the amount of roll the rider can put on the frame 203. As previously mentioned, the rider can roll the frame 203 about the axis 257 and is able to roll the frame 203 up to a maximum of 25º either side from vertical, until the frame abuts either end of the slot 267.

The panel 263 and struts 265 act to distribute the weight of the frame 203 and the rider to the platform 215 and rear wheels 213, so as to reduce the stress on the weld between the casing 235, the panel 261 and front wall 245. The load path of the weight of the rider passes through the seat 205, the portion of the frame 203 below the seat 205, the rollers 269, then to the lip 263 of the panel 261 and through the struts 265, to the platform 215 and rear wheels 213.

A solid cover arrangement (not shown) can be placed over the first bevel gear wheel 151,251 and the second bevel gear wheel 153,253 and the axle 155,255 of the tricycle 101,201. This provides an area clear of moving parts in which the user can place items which are to be carried on the platform 115,215 of the tricycle 101,201.

The tricycle 101,201 is fitted with the normal accessories as conventional bicycles would have. These include lights, reflectors and hub gear controls.

The axis 157,257 is within a range of approximately 5º to 30º from the horizontal. The preferred angle is approximately 15º from the horizontal.

Parts of the tricycle 101,201 as previously described, are manufactured from metal, in particular aluminium.

It is advantageous to have the load in which the tricycle 101,201 is carrying, at the rear of the tricycle 101,201 and behind the rider. This is because it allows the rider to clearly see any traffic on the road when pulling out of a junction, without the load obscuring his view. Additionally, it inhibits the rider from having to creep out on the tricycle 101,201 to properly look for traffic on the road when pulling out of a junction, and dangerously moving the load and tricycle 101,201 closer to oncoming traffic.

For load carrying tricycles it is advantageous that the load is positioned above the two adjacent wheels, primarily due to improved stability. Additionally, the fact that the load is shared over two wheels, reduces the pressure on the ground and the tyre pressure of the wheels, compared to if the load was positioned above a single wheel. This inhibits sinkage of the wheels in soft ground and reduced the probability of a puncture under the weight of the load. Furthermore, it is advantageous to have the tricycle being driven by the wheels that are directly under the load, because slippage of the wheels in relation to the ground is reduced, compared to if the tricycle was being driven by a wheel or wheels that were not directly under the load.

It could be that the tricycle 101,201 is suitable for use on tracks in addition to roads.

Various modifications could be made to the tricycle 101,201, for example the strut 141 and strut 143, or struts 265 could be arranged in different configurations, such as struts 265 could extend across to the opposite side walls of the platform 215. Additional struts could be provided in between the platform 215 and the panel 261. Rollers 269 could be replaced with suitable bearings. A flat plate could be used to cover the first bevel gear wheel 151,251 and the second bevel gear wheel 153,253 and the axle 155,255 of both tricycles 101,201. This would provide a flat even surface in which the user could place items which are to be carried.

It may be that a differential could be fitted to the first bevel gear wheel 151,251 and the second bevel gear wheel 153,253. The axle 155,255 could drive only one of the rear wheels 113,213 and the other rear wheel 113,213 could simply be free to rotate. In this case a hub gear 160,260 would need to only be present on the wheel that is being directly driven. The angle in which the rider is able to roll the frame 103,203 could vary, for example, it could be limited by stops at 10º from vertical or up to 45 º from vertical, or anywhere within this range. The teeth of the first cog wheel 121,221 and/or second cog wheel 123,223 could be at any suitable angle from a line tangent to such cog wheel, for example between 1º and 89º, preferably between 30º and 50º, most preferably between 40º and 49º.

Various structural members could be replaced with any other suitable material such as other plastics material or metals including steel or titanium, or any suitable metal alloy, or carbon fibre or any combination thereof.

It could be that the tricycle 101,201 is further provided with a motor to assist the rider. This could be an electric motor, a hydraulic motor, a petrol motor, a diesel motor or a steam motor.

It may be that the tricycle 101,201 is arranged such that the rider is able to lock the frame 103,203 in a rolled position relative to the rear wheels 113,213 and platform 115,215, with the frame 103,203 at an angle to the vertical. This could provide a deterrent from thieves, as it would be very difficult to cycle the tricycle 101,201 with the frame 103,203 at a locked angle to the vertical.

Whilst a shaft focused drivetrain arrangement as shown is preferred, it is conceivable but not claimed, that the roll movement of the frame relative to the rear wheels could be preserved with the axle being driven by other drive means, such as a drive belt extending between a pulley on the pedals and a pulley on the rear axle. In this case, the drive belt would be required to have sufficient elasticity so that it could stretch when the frame is rolled relative to the rear wheels.

Whilst exploring the tricycles shown in Figures 1 to 6 it became apparent that it would be highly desirable to be able to produce a tricycle which could be easily converted from a single gear ratio for use in relatively flat countries such as Holland to a tricycle having multiple gears for example 10 to 21 gears or 15 to 20 gears for use in hilly terrain (or when a tricycle is used for carrying heavy loads).

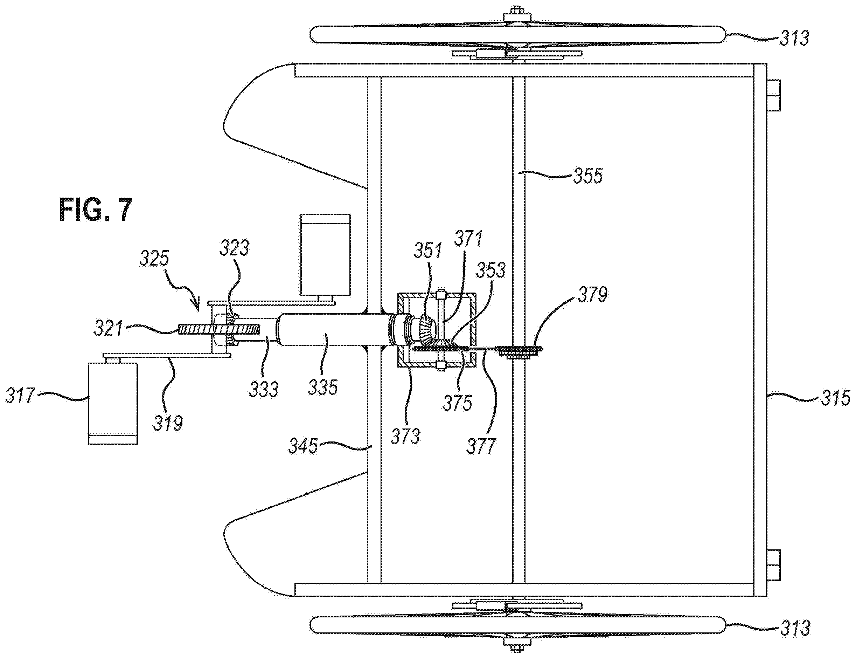

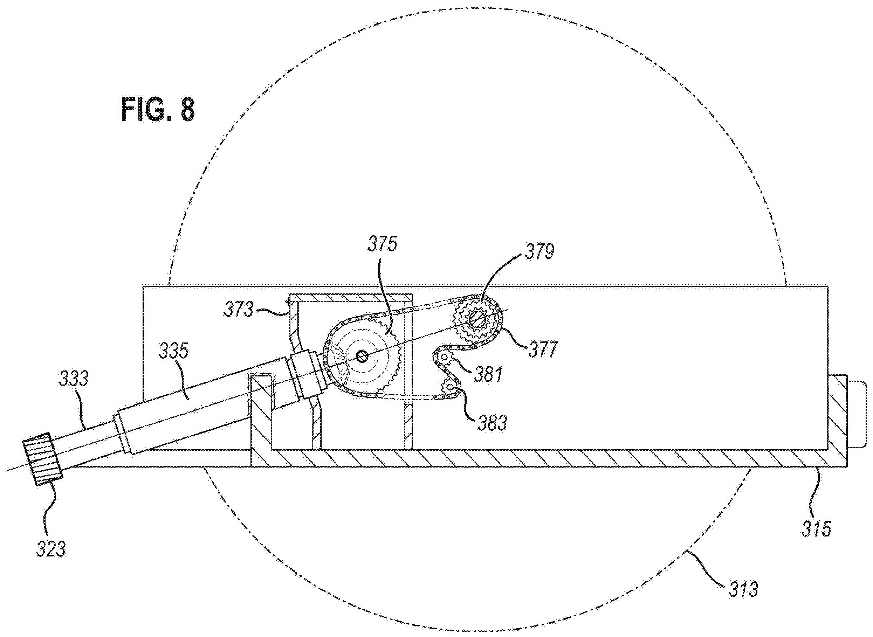

Figures 7 and 8 show a drivetrain which can be used in place of the drivetrain in Figures 1 to 6.

Referring to Figure 7, there is shown an alternate drivetrain, with the frame removed for clarity. Whilst a simple drivetrain is shown in both the first concept and second concept tricycles (Figures 1 to 6), the drivetrain as shown in Figures 7 and 8 is preferred and it is compatible with tricycles in accordance with both the first and second concept tricycles. The drivetrain as shown in Figures 7 and 8 can be used in both the first concept tricycle and second concept tricycle with all the associates features in these concept tricycle.

As previously described, in Figures 1 to 6 the drive shaft 133,233 rotates the first bevel gear wheels 151,251 and second bevel gear wheels 153,253, which in turn directly drive the rear axle 155,255 and ultimately drives the rear wheels 113,213 of the tricycle 101,201.

In Figure 7, there is also shown drivetrain which comprises a drive shaft 333 and which driveshaft 333 is driven by a helical gear assembly 325 comprising a first cog wheel 321 and a second cog wheel 323. The first cog wheel 321 is driven by a crank 319 and pedal 317 arrangement, when the rider is riding the tricycle, similarly as previously described. The second cog wheel 323 is mounted on a first end of the drive shaft 333.

As before, the drive shaft 333 resides within a casing 335 in which the drive shaft 333 is rotatable relative thereto. The casing 335 is fixed to a front wall 345 of a platform 315, preferably via a welded connection.

Figure 7 shows a frustoconical shaped first bevel gear wheel 351 is fitted to a second end of the drive shaft 333. The first bevel gear wheel 351 meshes with and drives a frustoconical shaped second bevel gear wheel 353, which in turn is mounted on an intermediate axle 371. The intermediate axle 371 extends across and is fixed to opposing walls of a box 373, which is secured to the base of the platform 315. The drive shaft 333 penetrates a wall of the box 373, with a portion of the casing 335 being fixed to that wall, preferably via a weld connection.

A primary sprocket wheel (drive wheel) 375 is fixed to the intermediate axle 371, such that when the second bevel gear wheel 353 and intermediate axle 371 are rotated, the primary sprocket wheel 375 is also rotated.

The primary sprocket wheel 375 is connected via a drive member, in particular a chain 377 to one of a plurality of secondary sprocket wheels (driven wheel) 379 which are mounted on a rear axle 355. The plurality of secondary sprocket wheels 379 are of different diameters to provide the tricycle with a number of gear ratios. The rear axle 355, as previously described is fitted with rear wheels 313, such that the rotation of the rear axle 355 drives the rear wheels 313. The chain 377 passes through an opening in the walls of the box 373.

In use, a rider will sit on the tricycle and pedal with their feet. The rotation of the pedals 317 and cranks 319 rotates the first cog wheel 321 and second cog wheel 323 in the helical gear assembly 325. This in turn rotates the drive shaft 333 and drives the first bevel gear wheel 351 and corresponding second bevel gear wheel 353. This turns the intermediate axle 371, which rotates the primary sprocket wheel 375 and drives the chain 377 around and rotates the secondary sprocket wheel 379. This then turns the rear axle 355 and drives the rear wheels 313 of the tricycle.

As better shown in Figure 8, the drivetrain further comprises an upper (jockey) pulley wheel 381 and a lower (idler) pulley wheel 383, which guide and tension the chain. The upper pulley wheel 381 and lower pulley wheel 383 are sprocket wheels, which engage the chain 377. These pulley wheels 381,383 also assist in chain 377 removal/attachment from/to the primary sprocket wheel 375 and/or the secondary sprocket wheel 379.

Although it is not shown, these pulley wheels 381,383 form part of a rear derailleur gear assembly and are connected via a cage plate.

The advantage of this drivetrain is that a derailleur gear assembly can be easily employed, wherein the chain 377 can be moved to drive different sized secondary sprocket wheels 379, which are mounted on the rear axle 355. The user is able to control the rear derailleur and change between particular gear settings, via a control on the handlebars 311 (not shown). A derailleur assembly has a larger number of gear ratios compared to hub gears. This is particularly advantageous when heavy loads are being transported on the platform 315 and/or when the terrain is hilly. Furthermore, derailleur gear assemblies are cheaper to manufacture.

This drivetrain permits the use of a favourable chain driven derailleur gear assembly as well as maintaining the ability of the user to lean and roll the frame relative to the rear wheels 313 and platform 315. Additionally, because the drive shaft 333 is shorter than the previously described drive shafts 133,233, the drivetrain as a whole will overall weigh less.

This drivetrain can be used with the first concept tricycle as shown in Figures 1 to 3, whereby the casing 335 of the drive shaft 333 is welded to a portion of the front wall 345 of the platform 315 and a cylinder 337 and collar 339 both rotatably reside around portions of the casing 335. The collar 335 is attached to the frame 103 via struts 141 and 143 in the same way as previously described.

This drivetrain can be used with the second concept tricycle as shown in Figures 4 to 6, whereby the casing 335 of the drive shaft 333 passes through a portion of the front wall 345 and/or panel 361 of the platform 315 and is welded thereto.

Various modifications could be made, for example it may be that a differential is fitted to the drive system. In particular, an open differential or limited slip differential could be fitted to the rear axle 355. This arrangement may include two half shafts in place of the rear axle 355, in which each half shaft has one rear wheel 113 fixed thereto. Each half shaft would be connected via the appropriate gearing means in accordance with known open differentials or limited slip differentials.

The rear wheels 313 can be driven via the two half shafts and the differential assembly, via the crown wheel of the differential being rotated. This crown wheel rotation could be provided by the chain 377 either driving the crown wheel directly or the chain could drive a gear or pulley wheel which then in turn drives the crown wheel.

It may be that a differential unit is formed together with the plurality of sprocket wheels.

A plurality of primary sprocket wheels 375 could be provided on the intermediate axle 371, along with a front derailleur and a control to allow the user to move the chain 377 between the plurality of primary sprocket wheels 375. Furthermore, it may be that a plurality of primary sprocket wheels 375 is provided on the intermediate axle 371 but only a single secondary sprocket wheel 379 is provided on the rear axle 355. These plurality of primary sprocket wheels on the intermediate axle 371 may be of different diameters in order to provide the tricycle with a number of gear ratios. Alternatively, a single primary sprocket wheel 375 could be provided on the intermediate axle 371 and a single secondary sprocket wheel 379 provided on the rear axle 355, wherein the tricycle would be a single speed.

The term drive member also covers a belt, therefore a drive belt could alternatively be used in the drivetrain but this is not claimed. The belt could - alternatively but not claimed - punched with holes, such that it could simply replace the chain 377 connecting primary sprocket wheels 375 and secondary sprocket wheels 379. It may be - alternatively but not claimed - that the belt is provided with ridges or castellations, in which corresponding ridged pulley wheels are required to replace the primary and secondary sprocket wheels 375, 379. It may be - alternatively but not claimed - that the belt is flat and flat pulley wheels are required to replace the primary and secondary sprocket wheels 375,379. In this case sufficient friction between the belt and the pulley wheels is required to avoid slippage. It could be - alternatively but not claimed - that the belt is manufactured from carbon fibre. It may be - alternatively but not claimed - that the belt is coated with a material that has a sufficiently high coefficient of friction. It could be - alternatively but not claimed - that the belt is coated with an elastomeric material.

Alternatively but not claimed, the drive belt can still drive the crown gear of a differential in the same way as the chain 377, as previously described. It may be - alternatively but not claimed - that the crown gear or adjacent gear wheel (which in turn drives the crown wheel) needs to be provided with a corresponding arrangement for being driven by the belt as previously described, such as ridges or castellations or flat pulleys.

It could be that hub gears are used instead of a derailleur gear assembly.

It may be that the drivetrain only drives one of the rear wheels 313 and the other rear wheel 313 could simply be free to rotate. It could be that the intermediate axle 371 drives two separate drivetrains or drive members, each of which in turn drive a respective rear wheel 313. It is possible that a drivetrain can drive a wheel directly, for example if a sprocket wheel or - alternatively but not claimed - pulley wheel is mounted directly onto a rear wheel 313.

The primary sprocket wheel 375 or (plurality thereof) could be fixed directly to the second bevel gear wheel 353, in addition to sharing the intermediate axle 371. This could be by bolts for example.

A frame member or a plurality of members could be fixed to and extend between the intermediate axle 371 and the rear axle 355, where the frame member is fixed such that the intermediate axle 371 and the rear axle 355 can still rotate relative to the frame member. This arrangement may be useful for assisting the mounting of the front and/or rear derailleur respectively or hub gear assemblies.

A further modification could be that the box 373 is provided with a lid which is fixed to the walls of the box 373 in order to cover the primary sprocket wheels 375. The lid could be secured with bolts.

It may be that the box 373 is replaced simply with two members, each extending from the ends of the intermediate axle 371 to the base of the platform 315.

It could be that a panel is provided across the platform 315 to provide a flooring in which load to be transported can be placed upon. This panel will cover the drivetrain and inhibit transported load from coming into contact with the drivetrain. It may be that this panel is removable, so as to allow for easy access to the drivetrain in the event that maintenance or repair needs to be carried out.

It may be that relatively small rear wheels or front and rear wheels could be used. This may reduce the angle of the axis (the roll axis) from the horizontal. In particular, this may allow the rider to feel that the roll movement about the axis of the frame relative to the rear wheels is more similar to that of a bicycle, which could be desirable. The smaller wheel arrangement may lower the centre of gravity of the tricycle.

It could be that a suspension unit, such as a spring arrangement is fitted between the rear axle and the platform, or between the platform and a flooring panel which covers at least a portion of the platform. This may be advantageous in the event that a fragile load or people are being carried on the platform.

A further modification could be the provision of a further sprocket or alternatively but not claimed, pulley wheel in which the drive member passes around, in order to keep the drive member under tension. It may be that this sprocket or alternatively but not claimed, pulley could be manually adjusted in order to manually adjust the tension in the drive member.
101/201 Tricycle
103/203 Frame
105/205 Seat
107/207 Front wheel
109/209 Fork
111/211 Handlebars
113/213/313 Rear wheels
115/215/315 Platform
117/217/317 Pedals
119/219/319 Cranks
121/221/321 First cog wheel
123/223/323 Second cog wheel
125/225/325 Helical gear assembly
127/227 Housing
129/229 Bolts
131/231 Holes
133/233/333 Drive shaft
135/235/335 Casing
137/237/ Cylinder
139 Collar
141 Strut
143 Strut
145/245/345 Front wall
147 Mount
149 Recess
151/251/351 First bevel gear wheel
153/253/353 Second bevel gear wheel
155/255/355 Axle
157/257 Axis
158 Stop
159/259 Disc brakes
160/260 Hub Gears
261 Panel
263 Lip
265 Struts
267 Slot
269 Rollers
371 Intermediate axle
373 Box
375 Primary sprocket wheel
377 Chain
379 Secondary sprocket wheel
381 Upper pulley wheel
383 Lower pulley wheel

## Claims

1. A tricycle comprising a frame (103,203), two rear wheels (313) and a front wheel (107,207), means enabling the frame (103,203) to roll relative to the rear wheels (313) and a drivetrain for rotating at least one rear wheel (313) to, in use, propel the tricycle along a road, wherein the drivetrain comprises a drive shaft (333) extending in a direction perpendicular to the axial direction of said two rear wheels (313), a drive wheel (375) rotatable by said drive shaft (333), **characterised in that** the drivetrain further comprises a helical gear assembly (325) connected to and arranged to rotate the drive shaft (333), wherein the drive wheel (375) is a sprocket wheel, a driven wheel (379) which, on rotation, rotates said at least one rear wheel (313), wherein the driven wheel (379) is a sprocket wheel, and a drive member (377) for transmitting rotation of said drive wheel (375) to said driven wheel (379), wherein the drive member (377) is a chain.

2. A tricycle as claimed in Claim 1, wherein the driven wheel (379) is a part of a differential.

3. A tricycle as claimed in Claim 1, wherein a plurality of sprocket wheels are provided and
wherein a rear derailleur gear assembly is provided with the plurality of sprocket wheels and/or
wherein a front derailleur gear assembly is provided with the plurality of sprocket wheels.

4. A tricycle as claimed in any preceding claim , including pedals (317) and cranks (319) which in use, drive the helical gear assembly (325).

5. A tricycle as claimed in any preceding claim, including a first bevel gear wheel (351) connected to said drive shaft (333), a second bevel gear wheel (353) which meshes with said first bevel gear wheel (351) and is drivingly connected to at least one of said rear wheels (313) and
wherein the second bevel gear wheel (353) is mounted on and rotatably fixed to an intermediate axle (371) and
wherein the intermediate axle (371) extends across walls of a box (373) and
wherein the drive wheel (375) is mounted on and rotatably fixed to said intermediate axle (371) and
wherein the driven wheel (379) is mounted on and rotatably fixed to a rear axle (355) and
wherein the at least one rear wheel (313) is mounted on the rear axle (355).

6. A tricycle as claimed in any preceding claim, wherein the helical gear assembly (325) is drivingly connected to the at least one rear wheel (313) via the drivetrain.

7. A tricycle as claimed in any preceding claim, wherein the tricycle is provided with a platform (315).

8. A tricycle as claimed in Claim 7, wherein the drive shaft (333) is provided with a casing (335) and wherein stops (158) are provided to limit the rotation of the frame (203) relative to the casing (235,335) and the platform (215,315).

9. A tricycle as claimed in Claim 7, wherein the platform (215,315) is provided with a panel (261).

10. A tricycle as claimed in Claim 9, wherein the panel (261) is provided with struts (265), where said struts (265) are also fixed to the platform (215,315).

11. A tricycle as claimed in Claim 9 or 10, wherein the panel (261) comprises a slot (267) in which a portion of the frame (203) passes through and wherein the ends of the slot (267) limit the rotation of the frame (203) relative to the casing (235,335) and the platform (215,315).

12. A tricycle as claimed in Claim 11, wherein a portion of the frame (203) is provided with rollers (269) which roll in the slot (267).

13. A tricycle as claimed in any preceding claim, wherein the frame (103,203) is rotatable about an axis (157,257) which is at an angle to the horizontal and
wherein the frame (103,203) is rotatable about an axis (157,257) which is coaxial with the axis of the drive shaft (333) and
wherein the axis (157,257) intercepts a point on the front wheel (107,207) that is in contact with the ground or on a point close thereto.

## Patentansprüche

1. Dreirad, umfassend einen Rahmen (103, 203), zwei Hinterräder (313) und ein Vorderrad (107, 207), Mittel, die es dem Rahmen (103, 203) ermöglichen, relativ zu den Hinterrädern (8313) zu rollen, und einen Antriebsstrang zum Drehen zumindest eines Hinterrades (313), um im Gebrauch das Dreirad entlang einer Straße anzutreiben, wobei der Antriebsstrang eine Antriebswelle (333) umfasst, die sich in einer Richtung erstreckt, welche zu der axialen Richtung der beiden Hinterräder (313) senkrecht ist, und ein Antriebsrad (375), das durch die Antriebswelle (333) drehbar ist, **dadurch gekennzeichnet, dass** der Antriebsstrang des Weiteren eine Schrägstirnradanordnung (325) umfasst, die mit der Antriebswelle (333) verbunden und so angeordnet ist, dass sie die Antriebswelle (333) dreht, wobei das Antriebsrad (375) ein Kettenrad ist, ein angetriebenes Rad (379), das bei Drehung das mindestens eine Hinterrad (313) dreht, wobei das angetriebene Rad (379) ein Kettenrad ist, und ein Antriebselement (377) zum Übertragen der Drehung des Antriebsrads (375) auf das angetriebene Rad (379), wobei das Antriebselement (377) eine Kette ist.

2. Dreirad nach Anspruch 1, wobei das angetriebene Rad (379) ein Teil eines Differentials ist.

3. Dreirad nach Anspruch 1, wobei eine Vielzahl von Kettenrädern vorgesehen ist und
wobei ein Schaltwerk mit der Vielzahl von Kettenrädern versehen ist und/oder
wobei ein Umwerfer mit der Vielzahl von Kettenrädern versehen ist.

4. Dreirad nach einem der vorangegangenen Ansprüche, aufweisend Pedale (317) und Kurbeln (319), die im Gebrauch die Schrägstirnradanordnung (325) antreiben.

5. Dreirad nach einem der vorangegangenen Ansprüche, beinhaltend ein erstes Kegelzahnrad (351), das mit der Antriebswelle (333) verbunden ist, ein zweites Kegelzahnrad (353), das mit dem ersten Kegelzahnrad (351) kämmt und antreibend mit zumindest einem der Hinterräder (313) verbunden ist,
wobei das zweite Kegelzahnrad (353) auf einer Zwischenachse (371) montiert und drehbar daran befestigt ist und
wobei sich die Zwischenachse (371) über Wände eines Gehäuses (373) erstreckt und wobei das Antriebsrad (375) an der Zwischenachse (371) angebracht und drehbar daran befestigt ist und
wobei das angetriebene Rad (379) an einer Hinterachse (355) angebracht und drehbar daran befestigt ist und
wobei das zumindest eine Hinterrad (313) an der Hinterachse (355) angebracht ist.

6. Dreirad nach einem der vorangegangenen Ansprüche, wobei die Schrägstirnradanordnung (325) über den Antriebsstrang mit dem mindestens einen Hinterrad (313) antreibend verbunden ist.

7. Dreirad nach einem der vorangegangenen Ansprüche, wobei das Dreirad mit einer Plattform (315) versehen ist.

8. Dreirad nach Anspruch 7, wobei die Antriebswelle (333) mit einem Gehäuse (335) versehen ist und wobei Anschläge (158) vorgesehen sind, um die Drehung des Rahmens (203) relativ zu dem Gehäuse (235, 335) und der Plattform (215, 315) zu begrenzen.

9. Dreirad nach Anspruch 7, wobei die Plattform (215, 315) mit einer Platte (261) versehen ist.

10. Dreirad nach Anspruch 9, wobei die Platte (261) mit Streben (265) versehen ist, wobei die Streben (265) auch an der Plattform (215, 315) befestigt sind.

11. Dreirad nach Anspruch 9 oder 10, wobei die Platte (261) einen Schlitz (267) umfasst, den ein Teil des Rahmens (203) durchgreift, und wobei die Enden des Schlitzes (267) die Drehung des Rahmens (203) relativ zu dem Gehäuse (235, 335) und der Plattform (215, 315) begrenzen.

12. Dreirad nach Anspruch 11, wobei ein Teil des Rahmens (203) mit Rollen (269) versehen ist, die in dem Schlitz (267) abrollen.

13. Dreirad nach einem der vorangegangenen Ansprüche, wobei der Rahmen (103, 203) um eine Achse (157, 257) drehbar ist, die in einem Winkel zu der Horizontalen steht, und wobei der Rahmen (103, 203) um eine Achse (157, 257) drehbar ist, die koaxial zu der Achse der Antriebswelle (333) ist, und
wobei die Achse (157, 257) einen Punkt an dem Vorderrad (107, 207) schneidet, der in Kontakt mit dem Boden oder einem Punkt in der Nähe davon ist.

## Revendications

1. Tricycle comprenant un cadre (103, 203), deux roues arrière (313) et une roue avant (107, 207), des moyens permettant au cadre (103, 203) de rouler par rapport aux roues arrière (313) et un train de transmission pour mettre en rotation au moins une roue arrière (313) pour, en utilisation, propulser le tricycle le long d'une route, dans lequel le train de transmission comprend un arbre de transmission (333) s'étendant dans une direction perpendiculaire à la direction axiale desdites deux roues arrière (313), une roue motrice (375) pouvant être mise en rotation par ledit arbre de transmission (333), **caractérisé en ce que** le train de transmission comprend en outre un ensemble d'engrenages hélicoïdaux (325) raccordé à l'arbre de transmission (333) et agencé pour mettre celui-ci en rotation, dans lequel la roue motrice (375) est une roue dentée, une roue menée (379) qui, lors d'une rotation, met en rotation ladite au moins une roue arrière (313), dans lequel la roue menée (379) est une roue dentée, et un organe d'entraînement (377) pour transmettre une rotation de ladite roue motrice (375) à ladite roue menée (379), dans lequel l'organe d'entraînement (377) est une chaîne.

2. Tricycle selon la revendication 1, dans lequel la roue menée (379) fait partie d'un différentiel.

3. Tricycle selon la revendication 1, dans lequel une pluralité de roues dentées sont prévues et
dans lequel un ensemble d'engrenages de dérailleur arrière est pourvu de la pluralité de roues dentées et/ou
dans lequel un ensemble d'engrenages de dérailleur avant est pourvu de la pluralité de roues dentées.

4. Tricycle selon une quelconque revendication précédente, incluant des pédales (317) et des manivelles (319) qui, en utilisation, entraînent l'ensemble d'engrenages hélicoïdaux (325).

5. Tricycle selon une quelconque revendication précédente, incluant une première roue à engrenage conique (351) raccordée audit arbre de transmission (333), une seconde roue à engrenage conique (353) qui s'engrène avec ladite première roue à engrenage conique (351) et est raccordée en entraînement à au moins l'une desdites roues arrière (313) et
dans lequel la seconde roue à engrenage conique (353) est montée sur un essieu intermédiaire (371) et fixée en rotation à celui-ci et
dans lequel l'essieu intermédiaire (371) s'étend sur des parois d'une boîte (373) et
dans lequel la roue motrice (375) est montée sur ledit essieu intermédiaire (371) et fixée en rotation à celui-ci et
dans lequel la roue menée (379) est montée sur un essieu arrière (355) et fixée en rotation à celui-ci et
dans lequel l'au moins une roue arrière (313) est montée sur l'essieu arrière (355).

6. Tricycle selon une quelconque revendication précédente, dans lequel l'ensemble d'engrenages hélicoïdaux (325) est raccordé en entraînement à l'au moins une roue arrière (313) via le train de transmission.

7. Tricycle selon une quelconque revendication précédente, dans lequel le tricycle est pourvu d'une plateforme (315).

8. Tricycle selon la revendication 7, dans lequel l'arbre de transmission (333) est pourvu d'un carter (335) et dans lequel des butées (158) sont prévues pour limiter la rotation du cadre (203) par rapport au carter (235, 335) et à la plateforme (215, 315).

9. Tricycle selon la revendication 7, dans lequel la plateforme (215, 315) est pourvue d'un panneau (261).

10. Tricycle selon la revendication 9, dans lequel le panneau (261) est pourvu d'étrésillons (265), où lesdits étrésillons (265) sont également fixés à la plateforme (215, 315).

11. Tricycle selon la revendication 9 ou 10, dans lequel le panneau (261) comprend une fente (267) que traverse une portion du cadre (203) et dans lequel les extrémités de la fente (267) limitent la rotation du cadre (203) par rapport au carter (235, 335) et à la plateforme (215, 315).

12. Tricycle selon la revendication 11, dans lequel une portion du cadre (203) est pourvue de rouleaux (269) qui roulent dans la fente (267).

13. Tricycle selon une quelconque revendication précédente, dans lequel le cadre (103, 203) peut entrer en rotation autour d'un axe (157, 257) qui forme un angle avec l'horizontale et dans lequel le cadre (103, 203) peut entrer en rotation autour d'un axe (157, 257) qui est coaxial avec l'axe de l'arbre de transmission (333) et
dans lequel l'axe (157, 257) intercepte un point sur la roue avant (107, 207) qui est en contact avec le sol ou sur un point proche de celui-ci.
